# EUROPEAN PATENT APPLICATION

(11) **EP 1 063 373 A1**
(43) Date of publication of application: **27.12.2000**
(21) Application number: 00202167.3
(22) Date of filing: 21.06.2000
(51) Int. Cl.: E05B 39/02, E05C 5/02, G01R 11/24, F16B 41/00, H02B 1/06

(54) **Cover latching arrangement, particulary for an electrical installation cabinet**

(30) Priority: 24.06.1999 NL 1012429
(71) Applicant: Odink & Koenderink B.V., 7482 CA Haaksbergen (NL)
(72) Inventor: Lageveen, Wouter, 7546 PE Enschede (NL)
(74) Representative: Boelsma, Gerben Harm, Ir.

(57) **Abstract**

A latch bolt with a cylindrical head and a hammer head-shaped end for locking a cover on an electrical installation cabinet. In a predetermined position the bolt can be freely inserted, whereby the bolt head is sunk into a corresponding bore of the cover. A quarter of a turn by means of a screw driver moves the bolt into the locked position. To prevent unauthorized release, a key way is provided in both the head and the bore wall, said key ways being located directly opposite to one another in the locking position. A disc-shaped sealing means is provided from which a key portion and a locking portion extend. When applying the sealing means on top of the bolt head the key portion enters into the combined key way space, as a result of which the bolt is secured against unauthorized rotation. Simultaneously the locking portion engages behind a shoulder within the bolt head, which prevents the sealing element from being removed. As an example the sealing means may be hingedly connected to the bolt head in the manner of a hinged lid.

## Description

The invention relates to a cover latching arrangement, particularly for an electrical installation cabinet, comprising a latch bolt with
a first, upper shank portion, that has a recess in its end face for inserting a piece of rotation tool (screw driver) and is adapted to be sunk into a bore of a corresponding diameter provided in the cover, said shank portion connecting, through a shoulder, to a second, lower shank portion of a smaller cross section, that has a laterally directed locking projection at its free end,
   wherein a downhole abutment, that correspondents with said shoulder, is provided in said bore, said abutment being locally interrupted to allow the locking projection to pass, and
   wherein a locking part projects from the cabinet wall to engage, upon an angular displacement of the inserted latch bolt, the locking projection of the latter, while there are means to lock the latch bolt in its operative position.

Such a cover latching arrangement is commonly known with electrical installation cabinets. The purpose of the cover latching arrangement is to prevent unauthorized persons, that is to say anyone else than the person authorized by the electrical energy supplier, from getting access to the interior of the installation cabinet. In this way the tapping of so called "unmeasured current" is meant to be prevented.

Essentially it should not be possible for unauthorized persons to undo the locking of the cover latching arrangement without causing irreparable damage. Traditionally one has thought to provide such locking by means of a locking wire provided with a security seal. For this purpose a diametrically directed, laterally open slot is provided in the upper shank portion of the well-known latch bolt at a distance under the end face of the latter, said slot being positioned - with the latch bolt in the operative locking position - directly opposite corresponding through slots provided in the wall of the bore. The locking wire is inserted through the radially aligned slot and through going slots respectively and sealed by means of the security seal. Traditionally, the security seal to be applied under authorisation of the electrical energy supplier, is formed of lead, whereas the recess for inserting a piece of rotation tool is a diametrically directed cut for placing a screw driver.

In practice this well-known locking arrangement by means of a sealed locking wire has shown not to provide a satisfactory safeguard against unlocking by unauthorized persons. For the locking wire often allows the angular displacement of the latch bolt, which is required for unlocking, to be made by means of a screw driver that can be freely put in the respective cut in the end face of the latch bolt. Moreover, the lead that is released with an authorized breaking of the seal, forms an environment damaging element. In connection with the latter disadvantage nowadays plastic "leads" are used, which may, however, easier slide over the locking wire to provide the play which is required for a dislocking annular movement of the latch bolt.

Now the invention aims at removing the above disadvantages of the well-known cover latching arrangement by taking measures, due to which the desired safeguard against unauthorized dislocking is less or even completely independent of a sealed locking wire.

Therefore the cover latching arrangement proposed by the present invention is characterized by a disc-shaped sealing means, that fits onto the upper end face of the latch bolt and is provided with at least one key portion which extends axially from the lower side of the sealing means and fits in the joint key space of two key ways, which are provided uphole in the bore wall and in the circumferential wall of the upper shank portion respectively, said key ways having open upper ends and being positioned directly opposite to one another when the latch bolt is in its active locking position, and further provided with a locking portion projecting from the lower side of the sealing means, said locking portion cooperating with a guide wall extending downwardly from said upper end face such that when the sealing means is placed said locking portion will be guided by said guide wall to a lock snap position within the upper shank portion.

Three functions are united in the disc-shaped sealing means. In the first place it covers the tool insertion recess in the end face of the latch bolt, so that no rotation tool (screw driver) can be applied. Furthermore the key portion secures that the latch bolt is effectively locked in its active locking position, whereas the locking portion locks the sealing means in place, so that the sealing means cannot be removed but through destructive treatment.

With a simple adaptation, comprising the provision of at least one upwardly open key way in the bore wall surrounding the new latch bolt, the use of the present cover latching arrangement in existing installation cabinets can be realized.

A simple embodiment of the invention is characterized in that at least one key portion is united with a locking portion to form one element, said element having at its free end a radially inwardly directed locking protuberance, which may be caused to move, through the guiding effect of the bottom face of the key way provided in the circumferential wall of the upper shank portion, into the locking position.

The bottom face of the key way functioning as a guide wall may change, at a distance under the end face of the latch bolt corresponding with the length of the key/locking element, into a radially inwardly directed shoulder, that may be engaged by the locking protuberance of the key/locking element.

When applying a single, combined key/locking element the disc-shaped sealing means may be hingedly connected, in the manner of a hinged lid, to the latch bolt body by means of a "ribbon hinge", which is positioned in the plane of the end face, diametrically opposite the key/locking element and the key way in the upper shank portion.

A cover latching arrangement with additional sealing facility is obtained, when the upper shank portion of the latch bolt is provided - as with the well-known bolt above referred to - with a diametrically directed slot below the upper face, which slot is open to at least one side and is positioned - in the active locking position - opposite a key way in the bore wall, while, according to a further feature of the present invention, the disc-shaped sealing means is provided with an opening, that corresponds with an opening, that is provided in the end face of the latch bolt and merges into the diametrically directed slot. In this embodiment a locking (sealing) wire may be inserted through the opening in the sealing means and allowed to extend through the diametrical slot and the slot in the bore wall outwardly, so that it can be provided with a seal in the well-known manner.

To obtain an effective guidance of the sealing wire to be inserted through the opening in the sealing means, it is to be preferred that the bottom of the diametrical slot is sloping downwards to the exit opening in the circumferential surface of the bolt. In case the diametrical slot is open to both sides and the bore wall is provided with two diametrically opposite through slots, it will be appreciated that the sealing wire may be additionally threaded one or more times diametrically through the latch bolt and the bore wall.

A particularly advantageous embodiment of the cover latching arrangement according to the invention, wherein the upper shank portion of the latch bolt is provided, as with the well-known bolt above referred to, with a diametrically directed slot at a distance below the end face and open to at least one side, is characterized in that the independent (loose) disc-shaped sealing means has two diametrically opposed key portions, whereas the locking portion projects at a central location from the disc-shaped sealing means and has at its free end a radially outwardly directed locking protuberance, a central opening provided in the end face of the latch bolt merging into the slot, through which opening, when placing the sealing means, the locking portion - with its locking protuberance yielding radially - is guided to an active position, in which the sealing means engages the end face of the latch bolt and the locking protuberance of the locking portion snappingly engages a shoulder that is formed at the transition between the opening and the slot.

Preferably the central part of the sealing means, carrying the locking portion, has a reduced thickness, that may be obtained by a recess in the upper face of the sealing means. Removal of the central portion by cutting (by an authorized person) will then be sufficient to release the sealing means, without damaging the latch bolt. Thus the latch bolt can be reused together with a new sealing means.

In this alternative embodiment it will also be possible to use the well-known locking wire, when the diametrically directed slot is open to both sides and the bore wall is provided with diametrically opposed through slots cooperating therewith.

The invention will be hereinafter further explained by two embodiments of the invention.
Fig. 1 is a cross-sectional view according to a diagonal plane through a corner portion of an installation cabinet and a cover, adapted for use of the cover latching arrangement according to the invention;
fig. 2 is a cross-sectional view according to the line II-II in fig. 1;
fig. 3 is a cross-sectional view according to the line III-III in fig. 1;
fig. 4 is a perspective view of a latch bolt for the cover latching arrangement according to the invention in a first embodiment, with the sealing means tipped open;
fig. 5 is a diagrammatic upper view of the latch bolt of fig. 4 in the cabinet/cover assembly of fig. 1, with the latch bolt, upon placement, turned to position in which the sealing means may be tipped down (closed);
fig. 6 shows a cross-section through the diagonal plane VI-VI in fig. 5, but with the sealing means in the closed position;
fig. 7 shows a latch bolt with a corresponding loose sealing means in a second embodiment of the invention and
fig. 8 shows a cross-section according to a diagonally directed plane of a latch bolt according to fig. 7 in the cabinet/cover assembly according to fig. 1, with the latch bolt in its locked position.

With reference to fig, 1 a corner section of an electrical installation cabinet is indicated at A, whereas the corresponding corner section of a matching cover is indicated at B.

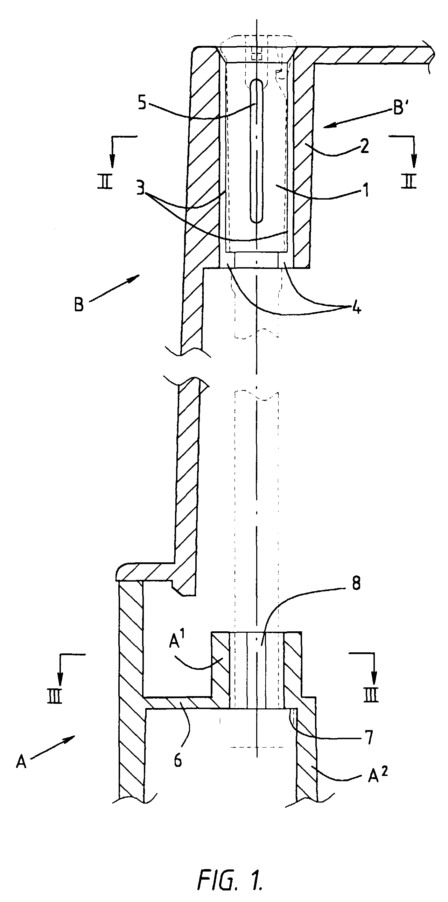

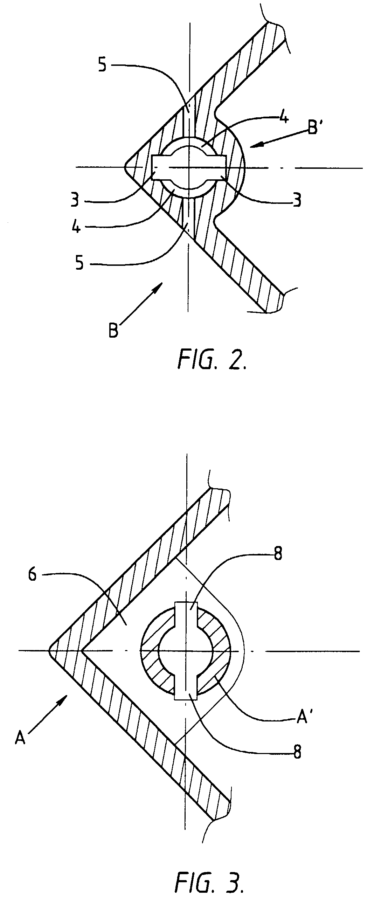

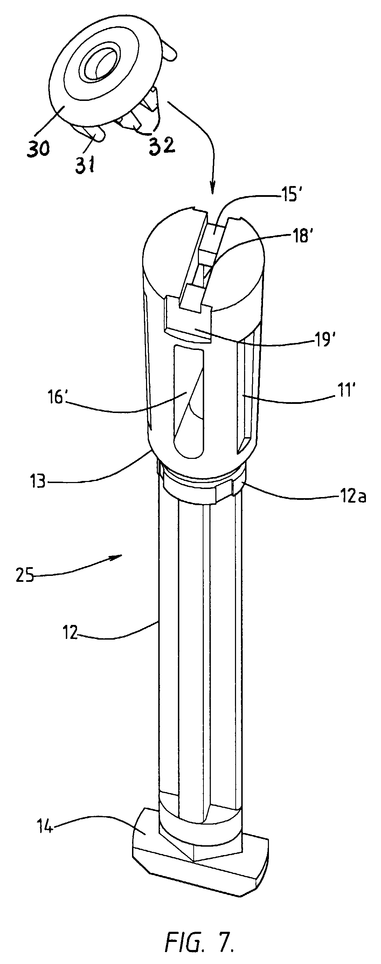

In the upper corner section of the cover B a tubular portion B1 is formed for inserting a latch bolt (to be described hereinafter with reference to fig. 1 and fig. 7) therein. The tubular portion B1 has a bore 1 with a bevel at the upper end. In the bore wall 2 two slots 3 are provided, which are positioned opposite to one another in a diagonal plane (vide also fig. 2). Downhole in the tubular portion B1 a collar 4 extends from the bore wall 2 inwardly, said collar being interrupted at the slots 3. Two through slots 5 extend through the bore wall 2 and each of the two adjacent side walls of the cover B, said through slots being positioned diametrically opposite to one another according to a plane that is perpendicular to the common plane of the slots 3.

Adjacent the upper rim of the cabinet corner section A shown in fig. 1 and 3 a platform portion 6 extends at right angles from the two adjacent cabinet corner walls, with a second cylindrical tubular portion A1 extending therefrom upwardly, of which the axis coincides with the axis of the first tubular portion B1 and the inner diameter of which corresponds with the inner diameter of the collar 4.

A2 is a skirt that extends downwardly from the platform portion 6 and confines a shoulder face 7 on the lower side of the platform portion 6. Two vertical and diametrically opposed through going slots 8 are formed in the wall of the tubular portion A1 and are located, as shown, in alignment with the through slots 5.

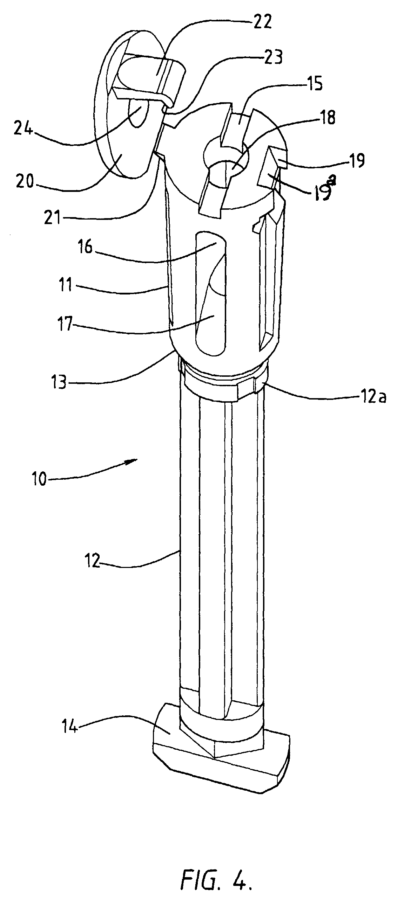

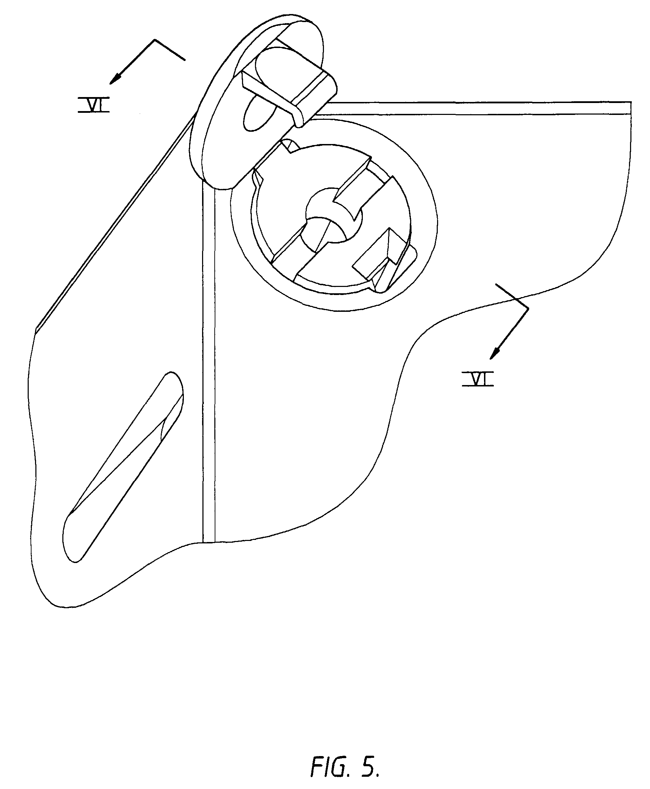

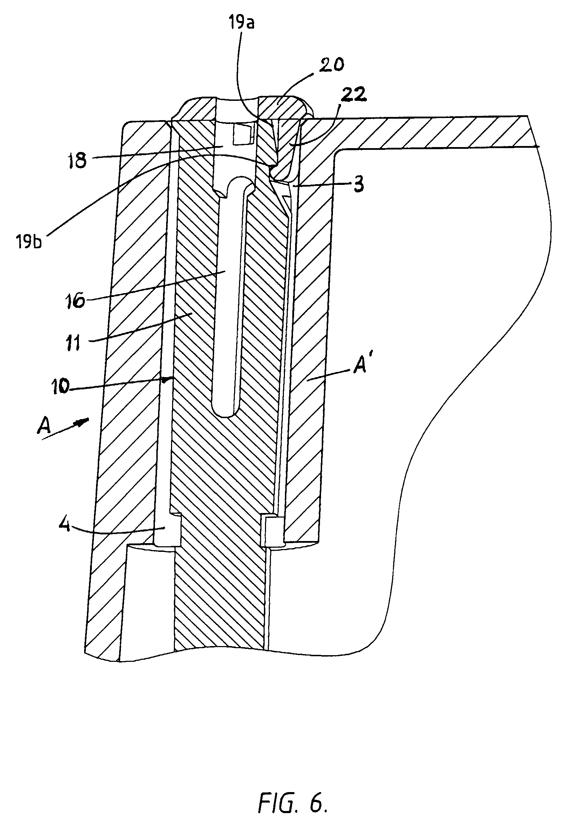

Reference is now made to fig. 4-6, showing a first embodiment of a latch bolt that matches the cabinet/cover assembly of fig. 1-3. This latch bolt 10 has an upper, substantially cylindrical shank portion 11, that connects, through a shoulder 13, to a lower shank portion 12, the latter portion being recessed all around for the purpose of saving material and carrying at its lower end a locking protuberance 14 in the shape of a hammer head. A diametrically directed cut 15 is provided in the upper end face of the shank portion 11 for placing a screw driver bit therein. In the upper shank portion 11 there is also provided a diametrically directed slot 16 which is open to both sides and has a bottom, that slopes from the sides upwardly to the centre. The slot 16 is connected with a central opening 18 that is provided in the upper end face of the shank portion 11. In the outer surface of the shank portion 11 a key way 19 is provided, of which the slightly laterally downwardly inclined bottom 19a (vide fig. 6) changes into a radially inwardly directed shoulder 19b. The length of the upper shank portion 11 corresponds with the length of the bore 1, i.e. with the distance between the upper face of the cover B and the upper face of the collar 4 (fig. 1). The diameter of the lower shank portion 12 corresponds with the inner diameter of the collar 4 and thus with the inner diameter of the tubular portion A'. Below the shoulder 13, at a distance corresponding with the height of the collar 4, the lower shank portion 12 has a slightly thickened edge portion 12a the diameter of which is slightly larger than the inner diameter of the collar 4.

The latch bolt 10 is preferably formed of a suitable plastics material. Excepting the provision of the central opening 18, the slightly inclined position of the slot bottom 17 and the provision of the slot 19, the latch bolt 10 so far described is of a well-known construction.

The latch bolt 10 further distinguishes from the well-known latch bolt by the disc-shaped sealing means 20, which is hingedly connected to the upper shank portion 11 in the manner of a hinged lid, by means of a ribbon hinge 21 that is located diametrically opposite the slot 19 in the plane of the upper face of the shank portion 11. The diameter of the sealing means 20 is slightly larger than the diameter of the upper shank portion 11 and corresponds with the largest diameter of the upper end bevel of the bore 1.

The disc-shaped sealing means 20 is provided, at a location diametrically opposite the ribbon hinge 11, with a key portion 22 extending from the lower face of the sealing means, said key portion having at its free end a radially inwardly directed locking protuberance 23. The key portion 22 cooperates with the slot 19 in such a way, that when the sealing means 20 is tipped down the key portion 22 enters into the key way 19, whereby the radially inwardly directed locking protuberance 23 is caused to move slightly outwardly by the inclined key way bottom 19a, until the sealing means 20 has engaged the upper face of the upper shank portion 11 and the locking protuberance 23 is allowed to engage under the shoulder 19b. Furthermore the disc-shaped sealing means 20 is provided with a central opening 24.

To lock the cabinet/cover assembly of fig. 1 the latch bolt 210 is simply inserted, with the sealing means 20 tipped up, downwardly into the bore 1 of the cover B. Provided that the insertion is taking place in a position, in which the hammer head 14 is directed according to the common diametrical plane of the key ways 3, the hammer head 14 is allowed to pass through the interruptions of the collar 4, until the hammer head 14 abuts the upper edge of the tubular portion A1 in the cabinet section A. By means of a screw driver that is placed with its bit into the cut 15, the latch bolt 10 is then turned through a quarter of a revolution, as a result of which the hammer head gets positioned in line with the slots 8 and is allowed to pass through these slots 8. With the latter movement the thickened edge portion 12a is pushed through the inner circumference of the collar 4, so that the bolt with the upper shank portion 11 is snappingly locked within the bore 1. Thereupon the latch bolt is caused to move through another quarter of a resolution, which brings the hammer head 14 in the locking position. At the same time the key way 19 gets positioned directly opposite one of the key ways 13. The sealing means 20 is then tipped down, whereby the key portion 22 enters the common space of the mutually opposite key ways 3 and 19 and the latch bolt 10 is locked against rotation. Furthermore the sealing means is locked against tipping up, due to the radially inwardly directed locking protuberance 23 engaging under the shoulder 19b. Moreover, a locking wire to be sealed in a well-known manner, can be threaded through the aligned openings 24 and 18, which locking wire is thereby guided, by the sloping slot bottom 17, towards and through a through going slot 5 in the cover wall, which through going slot is positioned (in the locking position under consideration) positioned directly opposite the diametrically directed slot 16.

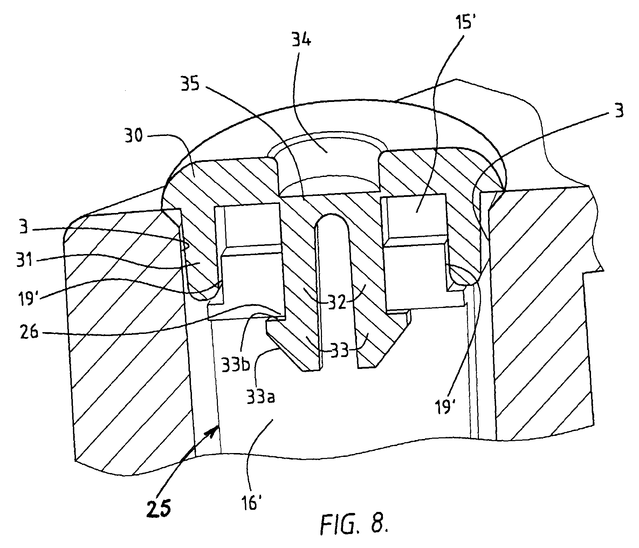

The latch bolt 25 shown in fig. 7 and 8 is substantially similar to the latch bolt 10 of fig. 4. Those parts of the latch bolt 25, which are identical to corresponding parts of the above described latch bolt 10, are indicated in fig. 7 with the same reference numbers and will not be described any further, whereas the parts, which are modified as compared with corresponding parts of the latch bolt 10, have been indicated by either the same reference number with an accent added thereto or by new reference numbers.

The upper shank portion 11' of the latch bolt 25 has in its upper face a slot-like cut 15' for placing the bit of a screw driver. Furthermore the central part of the cut 15' is further recessed to form a central opening 18', that merges through a sharp shoulder 26 (vide fig. 8) into the diametrically directed slot 16'. Furthermore, in the upper part of the upper shank section 11' there are two diametrically opposed key ways 19' which are open at their upper ends. An essential difference as compared with the latch bolt of fig. 4 is, that the sealing means 30 is a part which is loose from the pin 25. The also disc-shaped sealing means 30 has two diametrically opposed key portions 31 which project perpendicularly from the lower face of the dis-shaped means, the width of which key portions corresponds to the width of the key ways 3 in the cover (fig. 1) and of the key ways 19'. A pair of finger-shaped locking portions 22 extends centrally from the lower face of the disc-shaped sealing means 30, which locking portions have each at their free end a radially outwardly directed locking protuberance 33 with an obliquely directed locating face 33a and a locking hook face 33b. Finally a cylindrical recess 34 is formed in the upper face of the disc shaped sealing means 30, due to which the two finger-shaped locking portions 32 are connected to the remainder of the sealing means only by a thin connecting disc 35.

The latch bolt 25 can be placed into the cabinet/cover assembly of fig. 1 in a similar way as described hereinabove with respect to the latch bolt 10. Ultimately, upon the hammer head 14 being rotated into its active locking position, the key ways 3 in the cover B will get each directly opposite a key way 19' of the latch bolt. Finally, in that situation the sealing means 30 is applied. The two key portions 31 will thereby each enter into the common space of a key way 3 and an opposite key way 19', as a result of which the bolt 25 is prevented from being rotated. At the same time the two locking portions 32 pass through the central opening 18', whereby the locking portions 32 are first caused, under wedge action of the locating faces 33a, to pull together and are finally allowed, when the inserting movement is completed, to bias outwardly with their locking hook faces 33b engaging the shoulders 26. The sealing means 30 is thereby unreleasably locked in its place. To break the locking state the thin connecting disc 35 could be cut along its circumference, e.g. when an authorized person has to carry out operations in the interior of the cabinet/cover assembly, Thereafter the latch bolt 25 may be reused, in combination with a new sealing means 30.

As with the latch bolt 10 described earlier, the traditional locking wire could alo be used with the latch bolt 35. When using the latch bolt 25 in the cabinet/cover assembly of fig. 1 the diametrically directed slot 16' and the two locking portions 32 would, for that purpose, have to be angularly displaced through 90° as compared with the situation shown in the drawing.

## Claims

1. A cover latching arrangement, particularly for an electrical installation cabinet, comprising a latch bolt with
a first, upper shank portion, that has a recess in its end face for inserting a piece of rotation tool (screw driver) and is adapted to be sunk into a bore of a corresponding diameter provided in the cover, said shank portion connecting, through a shoulder, to a second, lower shank portion of a smaller cross section, that has a laterally directed locking projection at its free end,
wherein a downhole abutment, that correspondents with said shoulder, is provided in said bore, said abutment being locally interrupted to allow the locking projection to pass, and wherein a locking part projects from the cabinet wall to engage, upon an angular displacement of the inserted latch bolt, the locking projection of the latter, while there are means to lock the latch bolt in its operative position,
characterized by a disc-shaped sealing means, that fits onto the upper end face of the latch bolt and is provided with at least one key portion which extends axially from the lower side of the sealing means and fits in the joint key space of two key ways, which are provided uphole in the bore wall and in the circumferential wall of the upper shank portion respectively, said key ways having open upper ends and being positioned directly opposite to one another when the latch bolt is in its active locking position, and further provided with a locking portion projecting from the lower side of the sealing means, said locking portion cooperating with a guide wall extending downwardly from said upper end face such that when the sealing means is placed said locking portion will be guided by said guide wall to a lock snap position within the upper shank portion.

2. A cover latching arrangement according to claim 1, characterized in that at least one key portion is united with a locking portion to form one element, which element has at its free end a radially inwardly directed locking protuberance, which may be caused to move, through the guiding effect of the bottom face of the key way provided in the circumferential wall of the upper shank portion, into the locking position.

3. A cover latching arrangement according to claim 2, characterized in that the bottom face of the key way functioning as a guide wall changes, at a distance under the end face of the latch bolt corresponding with the length of the key/locking element, into a radially inwardly directed shoulder for engagement by the locking protuberance of the key/locking element.

4. A cover latching arrangement according to claims 2-3, characterized in that in case of a single, combined key/locking element the disc-shaped sealing means is hingedly connected, in the manner of a hinged lid, to the latch bolt body by means of a ribbon hinge, which is positioned in the plane of the end face, diametrically opposite the key/locking element and the key way in the upper shank portion.

5. A cover latching arrangement according to claims 1-4, wherein the upper shank portion of the latch bolt is provided with a diametrically directed slot below the upper face, which slot is open to at least one side and is positioned - in the active locking position - opposite a key way in the bore wall, characterized in that the disc-shaped sealing means is provided with an opening, that corresponds with an opening that is provided in the end face of the latch bolt and merges into the diametrically directed slot.

6. A cover latching arrangement according to claim 5, characterized in that the bottom of the diametrical slot is sloping downwards to the exit opening in the circumferential surface of the bolt.

7. A cover latching arrangement according to claim 1, wherein the upper shank portion of the latch bolt is provided with a diametrically directed slot at a distance below the end face and open to at least one side, characterized in that the disc-shaped sealing means, which is formed as an independent part, has two diametrically opposed key portions, whereas the locking portion projects at a central location from the disc-shaped sealing means and has at its free end a radially outwardly directed locking protuberance, whereas a central opening provided in the end face of the latch bolt is merging into the slot, through which opening, when placing the sealing means, the locking pin - with its locking protuberance yielding radially - is guided to an active position, in which the sealing means engages the end face of the latch bolt and the locking protuberance of the locking portion snappingly engages behind a shoulder that is formed at the transition between the opening and the slot.

8. A cover latching arrangement according to claim 7, characterized in that the central part of the sealing means, carrying the locking portion, has a reduced thickness.

9. A cover latching arrangement according to claim 8, characterized in that the reduced thickness is formed by a recess in the upper face of the sealing means.
